# EUROPEAN PATENT APPLICATION

(11) **EP 2 180 525 A2**
(43) Date of publication of application: **28.04.2010**
(21) Application number: 09153771.2
(22) Date of filing: 26.02.2009
(51) Int. Cl.: H01L 31/048

(54) **Photovoltaic tile**

(30) Priority: 15.09.2008 SG 200806822
(71) Applicant: Dragon Energy Pte. Ltd., Singapore 048623 (SG)
(72) Inventor: Nightingale, Christopher George Edward, 259983, Singapore (SG); Lee, Wai Hong, 391011, Singapore (SG); Tay, Boon Hou, 438814, Singapore (SG); Goh, Swee Ming, 591401, Singapore (SG)
(74) Representative: Stones, James Alexander

(57) **Abstract**

A photovoltaic tile 10 comprises a carrier tile 12 and a photovoltaic tile 14 supported in a recess 20 formed on a first side 18 of the carrier tile 12. Through hole electrical terminals 28 and 30 are provided on the carrier tile 12 and are in electrical connection with the photovoltaic cell 14. A cover plate 16 overlays the photovoltaic cell 14 and is sealed to the carrier tile 12. The photovoltaic tile 10 is made of an appearance to mimic that of a slate or shingle used for covering a roof.

## Description

### Field of the Invention

The present invention relates to a photovoltaic tile particularly, though not exclusively, for use on the roof of a building for converting solar energy to electrical energy.

### Background of the Invention

It is well known to use solar electric panels mounted on a roof of a building to provide electrical energy to supplement the energy needs of the building. Such panels may be fitted to a roof overlaying an existing roof covering. That is, the panels do not in themselves replace or act as a roof covering.

Applicant has previously devised a photovoltaic tile assembly that can also act as a roof covering. The assembly comprises a base tile through which one or more mechanical fasteners are driven for fastening to an underlying roof structure, and one or more photovoltaic cover tiles that are attached to, and overlie, the base tile. Each of the cover tiles is provided with one or more photovoltaic cells for converting solar energy into electrical energy. The cover tiles are electrically and mechanically coupled to a corresponding base tile by connection posts. The posts are pushed through holes formed in the base tile. A first end of each post extends above the base tile and is received in a through hole electric terminal in the cover tile to provide electrical and mechanical coupling of the cover tile to the base tile. A second opposite end of each post extends into a recess on the base tile and is received in a slot in an electrical connection tube that is subsequently seated in the recess in the base tile. Electrical and mechanical connection of the second end of the post requires a combined linear and rotational motion of the connection tube.

Further details of applicant's above described photovoltaic tile assembly are provided in Singapore Patent Application No. 200716871-9.

The present invention is a result of further research and development in relation to the cover tile in the above-described photovoltaic tile assembly.

### Summary of the Invention

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

One aspect of the present invention provides a photovoltaic tile comprising:
a carrier tile having a first side on which is provided a recess;
one or more photovoltaic cells seated in the recess; and,
a cover plate overlying the photovoltaic cells and sealed to the carrier tile.

The carrier tile may be made from a plastics material. Further, the carrier tile may be formed by a molding process.

In one embodiment the photovoltaic tile when viewed from a side provided with the photovoltaic cells has a slate-like appearance. In this embodiment the carrier tile is of a slate-like colour.

The photovoltaic cells may also be of a slate-like colour, or alternatively may be formed to be substantially transparent wherein the underlying carrier tile is visible through the photovoltaic cells.

In a first embodiment of the photovoltaic tile, the cover plate may overlie the carrier tile. Further, the cover plate may be of substantially the same footprint as the carrier tiles so that the edges of the carrier tile and cover plate are substantially co-terminus. This provides the photovoltaic tile with an upper surface that is substantially flat. In this embodiment the photovoltaic cells have a combined thickness substantially equal to or less than a depth of the recess.

In a second embodiment of the photovoltaic tile, the cover plate may be seated in the recess. In this embodiment the photovoltaic cell and the cover plate may be formed to have a combined thickness substantially equal to a depth of the recess. This results in an upper surface of the photovoltaic tile (that is the surface which is provided with the cover plate) being substantially flat.

At least one edge of the photovoltaic tile may be provided with a curved or rounded profile.

One or more electrical terminals are provided on the photovoltaic tile through which electricity generated by the photovoltaic cell can flow to a remote electrical device; such as for example a storage battery, a water heater, an inverter or an electric appliance.

A hole may be provided in the photovoltaic tile to receive a fastener for holding or fastening the photovoltaic tile assembly in a desired location or position or to a support.

In one embodiment, each electrical terminal may be located adjacent the hole. Indeed each terminal may circumscribe a respective hole. In this embodiment, each electrical terminal is a through hole terminal and may comprise a ring made of electrically conducting material.

An electrical conductor is provided to establish electrical connection between each electrical terminal and the photovoltaic cell. Each electrical conductor may be in the form of a bus bar. Each bus bar can be coupled to a corresponding electrical terminal. The electrical terminals and bus bars may be molded into the carrier tile.

In the embodiment where the cover plate overlies the carrier tile the electrical terminal and/or the electrical conducted may be sandwiched between the carrier tile and the cover plate. However, in the embodiment where the cover tile is seated in the recess the electrical terminal and/or the electrical conductor may be embedded in the carrier tile.

A further aspect of the invention comprises a photovoltaic tile comprising:
a carrier tile provided with at least one through hole electrical terminal;
one or more photovoltaic cells supported on the carrier tile; and
an electrical conductor for each electrical terminal wherein each electrical conductor provides electrical connection between respective electrical terminals and the
photovoltaic cell; and
wherein the electrical terminals and at least a portion of the electrical conductors is embedded in the photovoltaic tile.

### Brief description of the drawings

An embodiment of the present invention will now be described by way of example only with reference to the accompanying drawings in which:
Figure 1a is a representation of a first embodiment of a photovoltaic tile in accordance with the present invention;
Figure 1b is an exploded view of the tile shown in Figure 1a;
Figure 1c is a schematic representation of a carrier tile incorporated in the photovoltaic tile depicted in Figures 1a and 1b;
Figure 2a is a representation of a second embodiment of a photovoltaic tile in accordance with the present invention;
Figure 2b is an exploded view of the tile shown in Figure 2a;
Figure 2c is a schematic representation of a carrier tile incorporated in the photovoltaic tile depicted in Figures 2a and 2b;
Figure 3 is a representation of a portion of a roof covered by a plurality of photovoltaic tiles in accordance with the present invention;
Figure 4 is a cross section of a sealing system incorporating one embodiment of the photovoltaic tile;
Figure 5 is a cross section of a sealing system incorporating in another embodiment of the photovoltaic tile.
Figure 6a is an exploded view of a base tile on which a plurality of photovoltaic tiles can be mounted, the base tile configured to provide a series connection between three banks of parallel connected tiles.
Figure 6b is an equivalent circuit diagram of the tiles connected by the base tile shown in Figure 6a.
Figure 6c is an exploded view of a base tile on which a plurality of photovoltaic tiles can be mounted, the base tile configured to connect each of the tile in series.
Figure 6d is an equivalent circuit diagram of the tiles connected by the base tile shown in Figure 6c.
Figure 7 is a schematic representation of an electrical connection system that may be incorporated in the base tile to provide electrical connection between photovoltaic tiles; and
Figure 8 is a representation of an assembled base tile being fastened to a roof structure.

### Detailed description of preferred embodiment

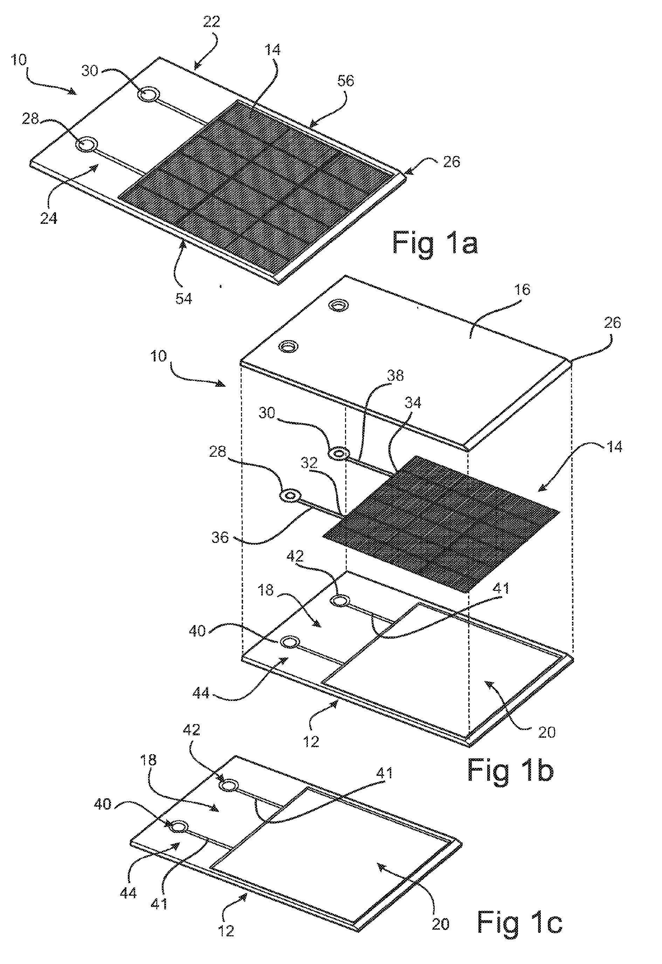

Referring to the accompanying drawings and in particular Figures 1a-1c, it can be seen that an embodiment of the photovoltaic tile 10 in accordance with the present invention comprises a carrier tile 12 and a photovoltaic cell 14. The carrier tile 12 has a first side 18 on which is provided a recess 20. The photovoltaic cell 14 is dimensioned relative to the recess 20 so that the cell 14 is seated in the recess 20. A cover plate 16 overlies the photovoltaic cell 14 and can be sealed to the carrier tile 12. In this particular embodiment the cover plate 16 has substantially the same footprint as the carrier tile 12, and is juxtaposed so that the edges of the plate 16 and the tile 12 are co-terminus.

A front or exposed face 22 of the photovoltaic tile 10 is provided with a flat surface 24. The formation of the flat surface 24 is achieved by forming the thickness of the photovoltaic cell 14 to be substantially the same as or less than a depth of the recess 20, and providing the cover plate 16 with a flat upper surface.

In order that a house or other building provided with the photovoltaic tile 10 blends in with surrounding houses and buildings that may be provided with slate or shingle roofs, the photovoltaic tile 10 can be made to have a slate-like appearance, i.e., a slate-like colour. This may be achieved by forming the carrier tile 12 of a slate-like colour. Additionally, the photovoltaic cell 14 can be formed to be substantially clear so that the slate-like colour of the underlying carrier tile 12 is visible through the photovoltaic cell 14; or, by forming the photovoltaic cell 14 to also be of a slate-like colour. The cover plate 16 is made of a transparent material to maximize transmission of solar energy to the cell 14. This also enables the slate-like colour of the underlying carrier tile 12 and/or photovoltaic cell 14 is visible therethrough.

Edges of the cover plate 16 may be sealed to a peripheral edge of the carrier tile 12 by use of sealants, adhesives, or ultrasonic welding.

A lower edge or strip 26 of the photovoltaic tile 10 which consists of the lower edge of the cover plate 16, is formed with a curved or rounded cross-section. It is believed that this may assist in reducing uplift or the effect of uplift in windy conditions.

In order to collect or otherwise use electricity generated by the photovoltaic cell 14, the photovoltaic tile 10 is provided with electrical terminals 28 and 30. The terminals 28 and 30 are electrically coupled with electrical contacts 32 and 34 of the photovoltaic tile 14 by respective conductors or bus bars 36 and 38. Each terminal 28 and 30 is in the form of a ring terminal which circumscribes respective through holes 40 and 42 formed in the photovoltaic tile 10. In particular, each hole 40 and 42 is formed in a portion 44 of the carrier tile 12 that does not contain the recess 20.

The bus bars 36 and 38 are electrically coupled to their respective terminals 28 and 30 by any suitable means such as by soldering. During the construction of the photovoltaic tile 10, the terminals 28 and 30 and the bus bars 36 and 38 can be attached to the photovoltaic cell 14. Recesses or grooves 20 are formed in the carrier tile to seat the terminals and bus bars when the a photovoltaic cell 14 is seated in the recess 20. Thereafter, the cover plate 16 is placed over the photovoltaic cell 14 and sealed onto the carrier tile 12. Thus the terminals 28 and 30, and the bus bars 36 and 38 are embedded in the photovoltaic tile 10 by way of being sandwiched between the cover plate 16 and the carrier tile 12.

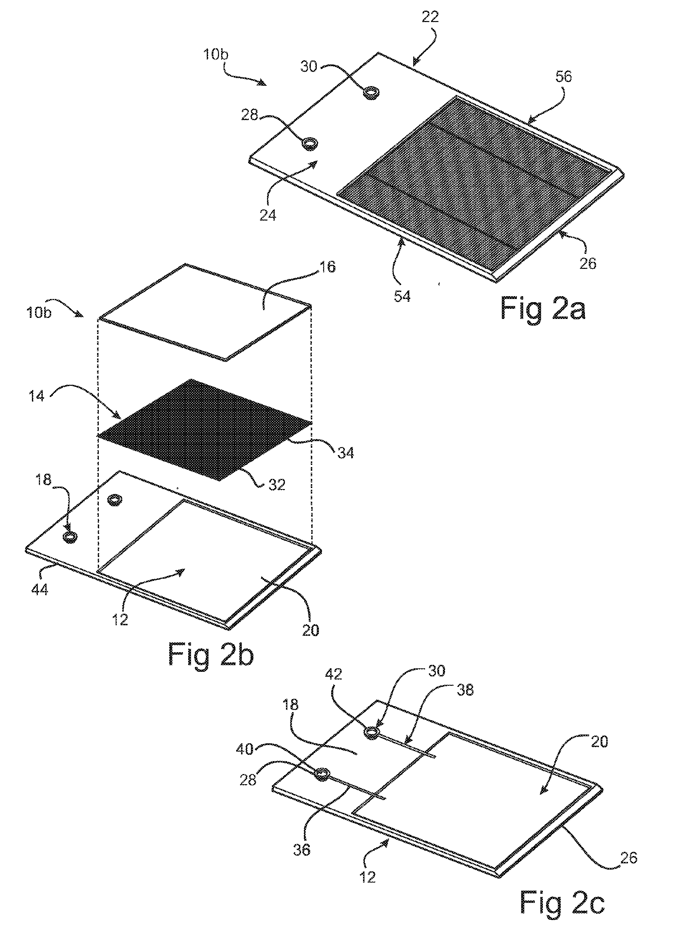

Figures 2a-2c illustrates a second embodiment of the photovoltaic tile denoted as 10B, in which the same reference numbers are used to denote the same features. As is apparent from a comparison of with Figures 1a-1c the two embodiments are very similar and according only the differences in these embodiments will be described.

In essence the main difference between the embodiments is that the cover plate 16 in the photovoltaic tile 10B is smaller and in particular is dimensioned to seat in the recess 20. As a consequence of this the recess 20 is made deeper with the combined thickness of the cover plate 16 and the photovoltaic cell 14 being about the same as the depth of the recess 20. This results in the photovoltaic tile 10B maintaining the flat upper surface 24 described above in relation to the photovoltaic tile 10B. Also, because the cover plate 16 is seated in the recess 20, the curved of beveled profile of the lower edge 26 of the tile 10B is now provided on the carrier tile 12. The terminals 28 and 30 and the bus bars 36 and 38 are embedded in the photovoltaic tile 10B by being embedded and more particularly molded in the carrier tile 12.

For example, the terminals 28 and 30 and a portion of the length of their attached bus bars 36 and 38 can be moulded into the carrier tile 12 during the formation of the carrier tile 12. However, a distal end of each bus bar extends into the recess 20 and is left free to enable connection with the photovoltaic cell 14. The cover plate 16 may also be made of a transparent plastics material.

The operation and use of both embodiments of the photovoltaic tiles 10 and 10B is identical. According for the sake of simplicity the operation and use thereof is described hereinafter with reference to the tile 10 only.

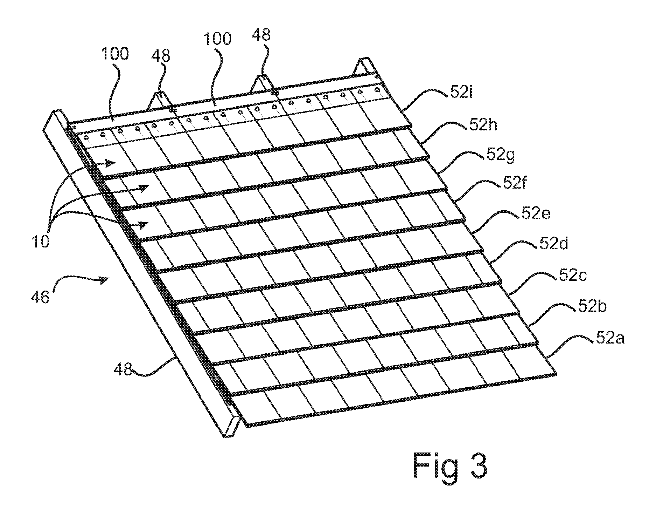

Figure 3 illustrates an array of photovoltaic tiles 10 overlying and coupled to a roof structure 46 which comprises a plurality of parallel roof rafters 48. As described in more detail hereinafter, the photovoltaic tiles 10 are connected to underlying base tiles 100 which in turn are fastened to the underlying rafters 48. The photovoltaic tiles 10 are arranged in successive rows 52a-52i, with row 52a being lowermost. Successive rows are staggered by half a photovoltaic tile 10 width relative to the underlying row. Further, a higher row partially overlies an adjacent underlying row. For example, the photovoltaic tiles 10 in the row 52b overlie the photovoltaic tiles 10 in the row 52a. More particularly, the photovoltaic tiles 10 in a higher row overlie portion 44 of the photovoltaic tiles 10 in an underlying row. This arrangement of photovoltaic tiles 10 provides the roof structure 46 with a roof covering that has a geometric appearance of a slate or shingle roof. This appearance is enhanced by the slate-like appearance and colouring of the photovoltaic tiles 10.

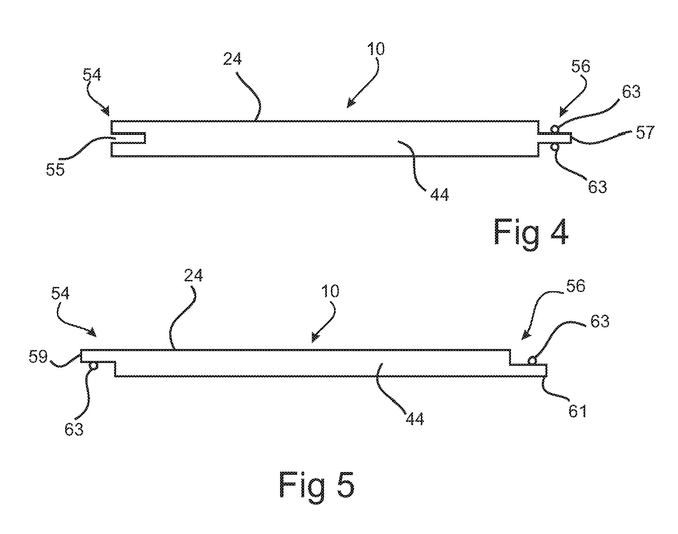

In their simplest form opposite longitudinal side faces of the photovoltaic tiles 10 are flat and abut against the side face of an adjacent tile 10. If waterproof sealing is required a bead of sealant material can be laid between or over the abutting surfaces. However in an alternate embodiment, as shown in Figures 4 and 5 opposite longitudinal sides 54 and 56 of each photovoltaic tile 10 can be formed with sealing structures or components which when mutually engaged form a waterproof seal between adjacent photovoltaic tiles 10 in any particular row 52. That is, the side 56 on one photovoltaic tile 10 can engage and form a seal with the longitudinal side 54 of an adjacent photovoltaic tile 10. This may be achieved in several different ways. For example, Figure 4 depicts a cross section of a tile 10 through portion 44, where the side 54 is formed with a longitudinal groove 55 and the side 56 with a longitudinal and laterally extending tongue 57 that fits into the groove and forms a seal therewith. In an alternative arrangement shown in figure 5b, the side 54 is formed with a laterally extending lip 59 of one half the thickness of the photovoltaic tile 10 and extending flush with the surface 24, while the side 54 is provided with a complementary lip 61 also of half the thickness of the photovoltaic tile 10 but flush with a bottom surface of the carrier tile 12 so that the side 56 of one photovoltaic tile 10 can overlie the side 54 of an adjacent photovoltaic tile 10 to form a waterproof seal. The sealing effect in both arrangements may be enhanced by the provision of one or more rubber seals 63 acting between the tongue 57 and groove 59 in the first instance, and the overlying lips 61, 63 in the second instance.

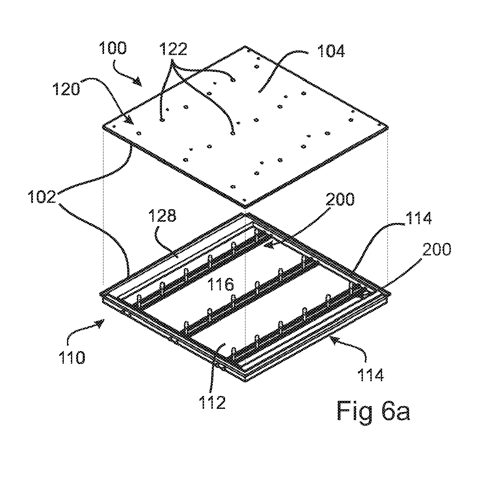

Figures 6a, 6b, 7 and 8 show in more detail an embodiment of the base tile assembly 100 to which one or more photovoltaic tiles 10 can be connected. The base tile 100 comprises a substrate 102 having a first (upper) surface 104, and an electrical connection system 200 supported by the substrate 102. The electrical connection system 200 comprises a plurality of conducting rails 202 that extend from side to side of the substrate 102 and one or more posts 204 each having a free end 206 that extends above the first surface 104.

In the particular embodiment shown in Figures 6a, 6b, 7 and 8, the substrate 102 comprises a bottom shell 110 having a planar bottom surface 112 and a peripheral wall 114 extending about the bottom surface 112. A cavity 116 is defined between the bottom surface 112 and the peripheral wall 114. The conducting rails 202 are disposed in the cavity 116.

The substrate 102 also comprises a top shell 120 that overlies the cavity 116 and is sealed to the bottom shell 110. The top shell 120 is provided with a plurality of rows of holes 122 through which the free ends 206 of the posts 204 extend. Prior to sealing the top shell 120 to the bottom shell 110, the cavity 116 may be filled with an insulating material to minimise heat transfer through the base tile 100.

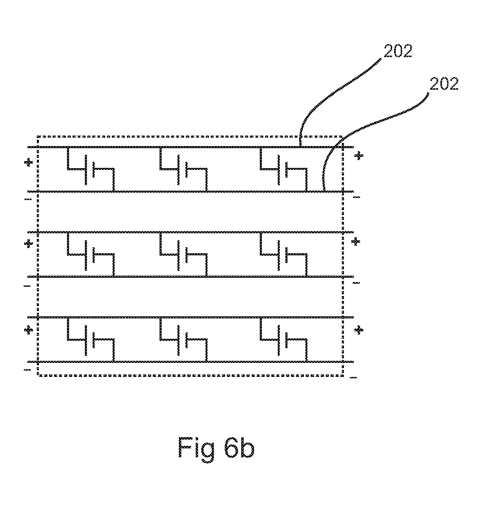

Opposite ends of the rails 202 are formed with complementary connectors so that the connectors at one end of a rail 202 in one base tile 100 can electrically connect with electrical connector of another rail 202 of an adjacent base tile 100. That is, the rails 202 in sideways adjacent base tiles 100 connect together to provide electrical continuity between sideways adjacent base tiles 100. This embodiment of the electrical connection system 200 provides for each base tile 100 three independent banks of parallel connected photovoltaic tiles 10, as depicted in the circuit diagram in Figure 6b. Each bank is electrically connected to an adjacent banks of an adjacent base tile 100. However as explained below different electrical connection systems may be incorporated in the base tile to provide electrical outputs.

Further details of the construction and other features of the base tile assembly 100 and the electrical connection system 200 are described in the Applicant's co-pending European patent applications claiming priority from Singapore patent applications Nos. 200806823-1 and 200806821-5 respectively. The above brief description is provided to assist in the following description of the operation and connection of the photovoltaic tiles 10.

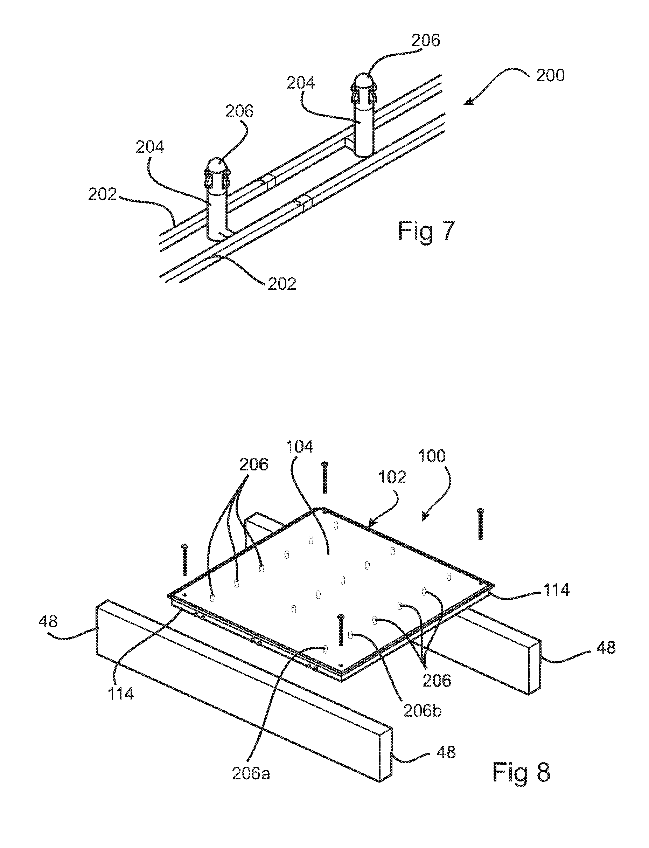

As previously described, each photovoltaic tile 10 is provided with a pair of terminals 28 and 30. A plurality of photovoltaic tiles 10 can be connected to a base tile 100. This is achieved by aligning the terminals 28 and 30 of a photovoltaic tile 10 with the free end 206 of two laterally adjacent posts 204 extending above the surface 104. For example, referring to Figure 8, a first photovoltaic tile 10 could be coupled with the base tile 100 by pushing free ends 206a and 206b at the lower lefthand corner of the base tile assembly 100 through the holes 40 and 42 of a photovoltaic tile 10. The posts 204 are configured to electrically couple with the corresponding terminals 28 and 30 to provide electrical coupling with the photovoltaic cell 14 of that particular photovoltaic tile 10. Subsequently, an adjacent photovoltaic tile 10 in the same row as that previously laid is coupled to the next two laterally adjacent free ends 206. This process is continued for each row of photovoltaic tiles 10 so that the whole, or a portion of, a roof structure can be covered with photovoltaic tiles 10.

The electricity generated by the photovoltaic cells 14 in each photovoltaic tile 10 is conducted through the posts 108 and rails 106 to remote electrical devices and apparatuses such as storage batteries, inverters, heaters, or other appliances.

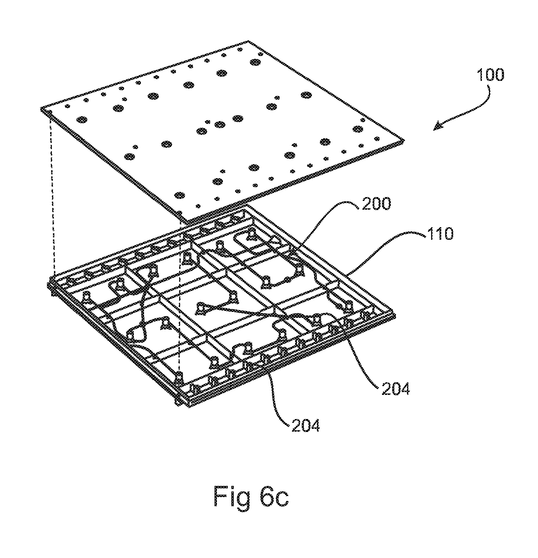

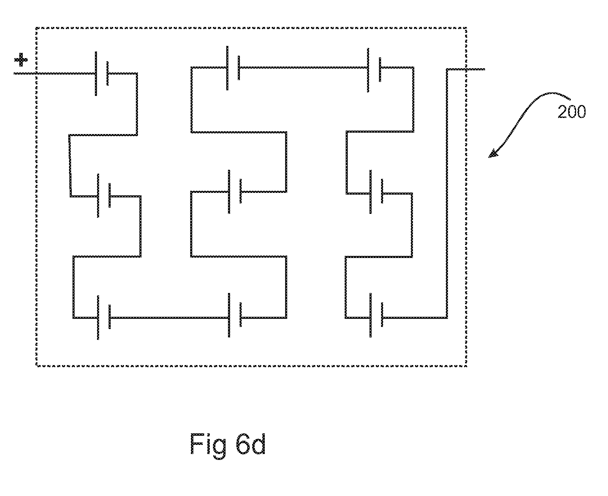

Figure 1 depicts a photovoltaic tile 10 with eighteen photovoltaic cells 14 arranged in a 3x6 matrix. In addition, Figures 3 and 6 depict a base tile 100 to which nine photovoltaic tiles 10 can be connected.

The specific number of cells 14 per photovoltaic tile 10, and the manner in which the cells are connected within the tile 10, as well as the number of tiles 10 connected with each base tile 100 and the manner in which the tiles 10 are electrically connected is dependent on numerous design considerations. These include, but are not limited to:
(a) the nature of the load to be driven by the photovoltaic tiles 10, in particular any minimum voltage and/or current requirements;
(b) the shape and configuration of the photovoltaic cells 14 as manufactured and how the cells can tessellate on a carrier tile 12; and
(c) the effects of shadowing on a cell 14.

For example, in the event that photovoltaic tiles 10 in accordance with the present embodiments of the invention are to be used to provide sufficient voltage to drive a common indoor grid inverter, it is appropriate that the cells 14 be combined in a manner to produce a maximum voltage in the order of 180 volts. Consider for example a typical off-the-shelf multi-crystalline photovoltaic cell produces a maximum voltage of approximately .5 of a volt. The current produced is dependent upon the size or area of the cell. In order to generate 180 volts, clearly a number of cells 14 need to be connected in series. In determining the best way to produce a voltage of approximately 180 volts one needs to consider trade-offs between:
(i) having a large area with photovoltaic cells connected in series which may adversely suffer from reduced power output if one of the series connected cells does not receive full illumination due to the shadow effect (ie due a shadow case by a surrounding building or by virtue of foreign opaque objects such as leaves and/or bird droppings;
(ii) having a smaller area of photovoltaic cells connected in series which is less affected by the shadow effect, however produces higher voltage which may give rise to safety concerns and produce a current that may not be sufficiently high enough for the required load and/or associated energy management system.

One specific configuration as shown in Figures 6c and 6d appears to be well suited to driving a typical indoor grid inverter having a MPPT range of 150+ volts comprises a tile 10 having an arrangement of nine photovoltaic cells 14 arranged in a 3x3 series connected matrix and where each base tile 100 carries nine series connected photovoltaic tiles 10. Here the electrical connection system differs from that shown in Figures 6a, 6b, and 7 as it provides a series connection between each of the photovoltaic tiles 10 as depicted in Figures 6c and 6d. In such a configuration each base tile 100 produces an output voltage of approximately 41 volts and a current of approximately 1.25amps. By connecting five base tiles 100 together in series an output voltage of approximately 180 volts is achieved. If each base tile has dimensions of 600x600mm, then the area of a roof required to generate approximately 180 volts is 600x3000mm where five of the base tiles 100 are placed side by side.

It is to be understood, however, that this is not the only configuration possible in order to generate sufficient voltage to drive the inverter in question. Other configurations are also possible such as, for example, one where each photovoltaic tile 10 carries ten series connected photovoltaic cells 14 arranged in a 2x5 matrix and where each base tile 100 carries nine series connected tiles 10. In that event, each tile 10 produces approximately 5 volts, and thus each base tile 100 produces approximately 45 volts, in which case four series connected base tiles 100 are required to generate approximately 180 volts.

In a further alternate, each photovoltaic tile 10 may carry say 25 photovoltaic cells 14 arranged in a 5x5 matrix. In this case, each tile 10 would produce approximately 12.7 volts and thus each base tile 100 having nine series connected photovoltaic tiles 10 produces approximately 114 volts in which case two series connected base tiles 100 are required to achieve a 180 volt output.

In the above described configurations each photovoltaic tile 10 comprises a plurality of photovoltaic cells 14. This requires cutting and thus wastage of the cells. In a further variation each photovoltaic tile may comprise a single uncut photovoltaic cell. With a parallel connection between the photovoltaic tiles on each base tile as depicted in Figures 6a and 6b, but with the banks connected in series, each base tile would produce an output voltage of approximately 4.6 volts and current of approximately 5.1 amps. Thus to achieve an output voltage of at least 180 volts forty series connected base tiles are required. But with the electrical connection as shown in Figures 6c and 6d, each base tile would produce an output voltage of approximately 0.5 volts and current of approximately 5.1 amps. Thus to achieve an output voltage of at least 180 volts one hundred and nineteen series connected base tiles are required.

Now that embodiments of the present invention have been described in detail it will be apparent to those skilled in the art that numerous modifications and variations may be made without departing from the basic inventive concepts. For example, the carrier tile 12 is described and illustrated as comprising a single recess 20 for seating a single photovoltaic cell 14. However, multiple recesses may be formed each seating separate smaller photovoltaic cells. Further, the terminals 28 and 30 are depicted as separate through hole terminals in the carrier tile 12. However, in an alternate embodiment the terminals 28 and 30 may be formed concentrically with each other whereby electrical connection can be achieved by the use of a co-axial single pin connector. Conversely, if desired more than two terminals may be provided on a tile 10, for example, two positive and two negative terminals where the terminals of the same priority are connected in parallel to the photovoltaic cell 14. This provides a degree of redundancy in the event of the failure of one connector, as well as providing greater mechanical coupling of the photovoltaic tile 10 to a base tile 100.

All such modifications and variations together with others that would be obvious to persons of ordinary skill in the art are deemed to be within the scope of the present invention the nature of which is to be determined from the above description and appended claims.

## Claims

1. A photovoltaic tile comprising:
a carrier tile having a first side on which provided a recess;
one or more photovoltaic cells seated in the recess; and,
a cover plate overlying the photovoltaic cells and sealed to the carrier tile.

2. The photovoltaic tile according to claim 1 wherein the carrier tile is made from a plastics material.

3. The photovoltaic tile according to claim 1 or 2 wherein the carrier tile is formed by a molding process.

4. The photovoltaic tile according to any one of claims 1-3 wherein the photovoltaic tile when viewed from a side provided with the photovoltaic cell has a slate-like appearance.

5. The photovoltaic tile according to any one of claims 1-4 where in the carrier tile is of a slate-like colour.

6. The photovoltaic tile according to any one of claims 1-5 where in the photovoltaic cell is of a slate-like colour, or alternatively is substantially transparent wherein the underlying carrier tile is visible through the photovoltaic cell.

7. The photovoltaic tile according to any one of claims 1-6 wherein at least one edge of the photovoltaic tile is provided with a curved or rounded profile.

8. The photovoltaic tile according to any one of claims 1-7 further comprising one or more electrical terminals through which electricity generated by the photovoltaic cell can flow to a remote electrical device.

9. The photovoltaic tile according to claim 8 wherein a hole is provided in the carrier tile to receive a fastener for holding or fastening the photovoltaic tile assembly in a desired location or position or to a support.

10. The photovoltaic tile according to claim 9 wherein the or each electrical terminal is located adjacent the hole.

11. The photovoltaic tile according to claim 9 or 10 wherein each electrical terminal circumscribes a respective hole.

12. The photovoltaic tile according to any one of claims 8-11 wherein each electrical terminal is in the form of a ring made of electrically conducting material.

13. The photovoltaic tile according to any one of claims 8-12 wherein an electrical conductor is provided to establish electrical connection between each electrical terminal and the photovoltaic cell.

14. The photovoltaic tile according to claim 13 wherein each conductor is in the form of a bus bar.

15. The photovoltaic tile according to any one of claims 8-14 wherein the electrical terminals are embedded in the photovoltaic tile.

16. The photovoltaic tile according to any one of claims 13-15 wherein the electrical conductors are embedded in the photovoltaic tile.

17. The photovoltaic tile according to any one of claims 1-16 wherein the cover plate is seated in the recess.

18. The photovoltaic tile according to claim 17 wherein the photovoltaic cell and the cover plate have a combined thickness substantially equal to a depth of the recess.

19. The photovoltaic tile according to any one of claims 1-18 wherein a surface of the photovoltaic tile which is provided with the cover plate is substantially flat.

20. The photovoltaic tile according to any one of claims 1-16 wherein the cover plate overlies and is substantially coterminous with the carrier tile.

21. The photovoltaic tile according to claim 20 wherein the photovoltaic cell has a thickness substantially equal to or less than a depth of the recess.

22. The photovoltaic tile according to claim 20 or 21 wherein the electrical terminals are sandwiched between the carrier tile and the cover plate.

23. A photovoltaic tile comprising:
a carrier tile provided with at least one through hole electrical terminal;
one or more photovoltaic cells supported on the carrier tile; and
an electrical conductor for each electrical terminal
wherein the or each electrical conductor provides electrical connection between respective electrical terminals and the photovoltaic cell; and
wherein the electrical terminals and at least a portion of the electrical conductors is embedded in the photovoltaic tile.

24. The photovoltaic tile according to claim 23 wherein the photovoltaic tile when viewed from a side supporting the photovoltaic cell has a slate like appearance.

25. The photovoltaic tile according to claim 23 or 24 wherein the carrier tile is provided with a recess in which the photovoltaic cell is supported.

26. The photovoltaic tile according to claim 25 further comprising a cover plate overlaying the photovoltaic cell and sealed to the carrier tile.

27. The photovoltaic tile according to any one of claims 13-15, 25 and 26 wherein a distal end of each electrical conductor is free and extends into the recess.
